# EUROPEAN PATENT APPLICATION

(11) **EP 3 291 347 A1**
(43) Date of publication of application: **07.03.2018**
(21) Application number: 17179166.8
(22) Date of filing: 30.06.2017
(51) Int. Cl.: H01M 8/0432, H01M 8/04537, H01M 8/0438, H01M 8/04746, H01M 8/0612, H01M 8/043, H01M 8/04701, H01M 8/04858, H01M 8/04664

(54) **FUEL-CELL POWER GENERATION SYSTEM COMPRISING INITIAL CORRECTION OF THE FLOW RATE OF FLUID SUPPLYING DEVICE**

(30) Priority: 31.08.2016 JP 2016168892
(71) Applicant: Toshiba Fuel Cell Power Systems Corporation, Yokohama-shi, Kanagawa 235-0017 (JP)
(72) Inventor: SAKATA, Yoshiaki, Kanagawa, 235-0017 (JP)
(74) Representative: Moreland, David

(57) **Abstract**

A fuel-cell power generation system includes a fluid processing device (1) comprising a reformer (11) or a fuel-cell body (12), a supplying device (2) supplying a fluid to the fluid processing device (1), a control device (3) controlling a flow rate of the fluid by controlling an operation quantity of the supplying device (2), and a sensor (4) provided in the fluid processing device (1), and measuring a status quantity, that is an object to be monitored, of the fluid processing device (1) or of an interior of the fluid processing device (1). The control device (3) controls the operation quantity in a way that the status quantity obtained by the sensor (4) becomes a preset status quantity setting value at a stage of initial activation, at a time of factory acceptance test, after installation or after maintenance.

## Description

### TECHNICAL FIELD

Embodiments of the present disclosure relate to a fuel-cell power generation system.

### BACKGROUND ART

Fuel cells are classified into various types depending on, for example, the difference of electrolyte, and solid polymer electrolyte fuel cells using a solid polymer electrolyte film as an electrolyte are suitable for applications such as a small co-generation system covering general household applications, and a power source for an electric vehicle in view of the low-temperature action performance and the high-output density, etc., and such fuel cells are types that is nowadays rapidly increasing the market size.

As for fuel-cell power generation systems including such solid polymer electrolyte fuel cell, in the case of, for example, a stationary small co-generation system for a general household application, this system includes a reformer, a fuel-cell body, an electricity control device, and a heat utilization system. The reformer produces a hydrogen containing gas from a hydrocarbon fuel represented by, for example, a city gas or an LPG. A fuel cell stack supplies, to a fuel electrode and an oxidizer electrode respectively to generate electromotive force, a hydrogen rich gas that contains H₂ as a main component, and CO₂, CO, and N₂ produced as a surplus gas produced by a CO shift transformer and a CO select oxidizer, , and ambient air. In addition, the electricity control device supplies, to an external load, the electric energy generated by the fuel cell stack, and the heat utilization system collects heat generated by power generation.

### CITATION LIST

### PATENT LITERATURES

Patent Document 1: JP 2003-157871 A

### SUMMARY OF INVENTION

### TECHNICAL PROBLEM

Conventionally, with respect to fuel-cell power generation systems, the reformer and the fuel-cell body are provided with a supplying device that supplies an raw fuel and air necessary for power generation, and a flowmeter that measures a supply flow rate in order to obtain the necessary power generation amount. This flowmeter monitors the supply flow rate by the supplying device, and the supply flow rate is adjusted as necessary.

However, the supplying device and the flowmeter have an individual difference, having variability in the characteristics. In addition, a pressure-loss factor varies depending on the installation environment of the fuel-cell power generation system. As a specific example case for the supplying device, the supplying device has a correspondence between the operation quantity and the fluid flow rate supplied based on the operation quantity, but this correspondence varies for each supplying device. Hence, when there is a gap in the correspondence that is a reference, the necessary flow rate is not supplied even with the same operation quantity, and the necessary power generation amount is not achieved. Hence, it is necessary to perform correction and to adjust the operation quantity. When, however, the correction is made with the reference correspondence still containing an error, such correction contains an error, and the system operation becomes unstable.

An objective of the present disclosure is to provide a fuel-cell power generation system which is capable of correcting the individual difference and variability of device and facility, and is capable of stably operating.

### SOLUTION TO PROBLEM

A fuel-cell power generation system according to an embodiment of the present disclosure includes a fluid processing device including a reformer or a fuel-cell body, a supplying device supplying a fluid to the fluid processing device, a control device controlling a flow rate of the fluid by controlling an operation quantity of the supplying device, and a sensor provided in the fluid processing device, and measuring a status quantity, that is an object to be monitored, of the fluid processing device or of an interior of the fluid processing device. The control device controls the operation quantity in a way that the status quantity obtained by the sensor becomes a preset status quantity setting value at a stage of initial activation, at a time of factory acceptance test, after installation, or after maintenance.

### BRIEF DESCRIPTION OF DRAWINGS

FIG. 1 is a diagram illustrating an overall structure of a fuel-cell power generation system according to a first embodiment;
FIG. 2 is a diagram illustrating a structure of a control device according to the first embodiment;
FIG. 3 is a diagram illustrating a structure of a control device according to a second embodiment; and
FIG. 4 is a diagram illustrating a structure of a control device according to a third embodiment.

### DESCRIPTION OF EMBODIMENTS

### [1. First Embodiment]

### [1-1. Structure]

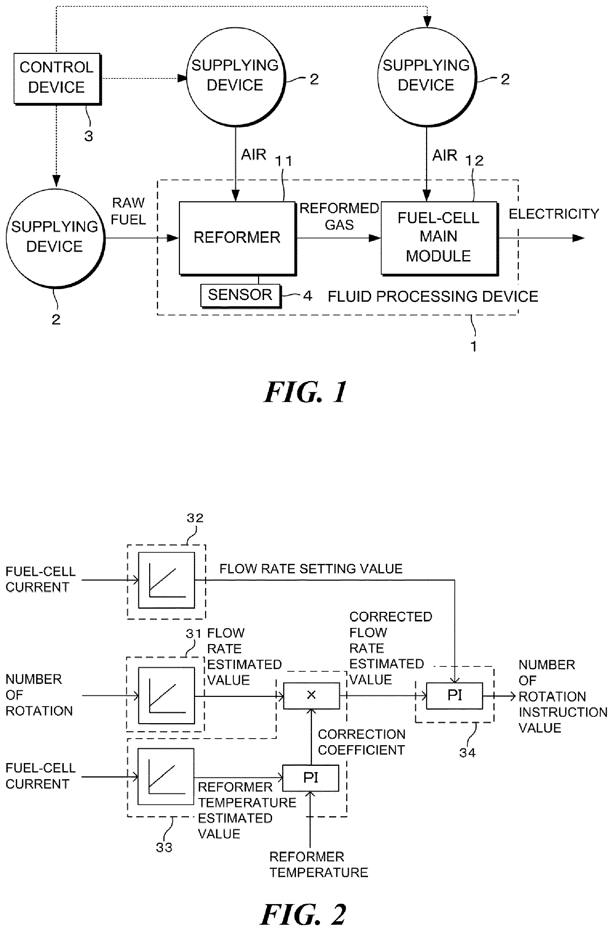

A fuel-cell power generation system according to this embodiment will be explained below with reference to FIGs. 1 and 2. FIG. 1 is a diagram illustrating an overall structure of the fuel-cell power generation system.

The fuel-cell power generation system includes a fluid processing device 1, a supplying device 2 that supplies the fluid to the fluid processing device 1, a control device 3 that controls the flow rate of the fluid by controlling the operation quantity of the supplying device 2, and a sensor 4 provided in the fluid processing device 1, and measures a status quantity, that is an object to be monitored, of the fluid processing device 1 or of the interior thereof.

The fluid processing device 1 processes the fluid, and in this embodiment, corresponds to the reformer 11, and the fuel-cell body 12. The reformer 11 has the raw fuel supplied thereto, produces a hydrogen-rich reformed gas, and supplies this gas to the fuel-cell body 12. The reformer 11 includes a desulfurization device that desulfurizes the raw fuel, a reforming device that has therein a burner chamber, reforms the fuel that has undergone the desulfurization and produces hydrogen, a CO transforming device that decreases the CO concentration in the reformed gas obtained from the reforming device by a CO transforming reaction (shift reaction), and a CO removing device that removes CO from the reformed gas obtained from the CO transforming device. The fuel-cell body 12 supplies, to the fuel electrode and the oxidizer electrode respectively, the hydrogen-rich reformed gas, and air, and generates electromotive force.

The sensor 4 is provided in the fluid processing device 1 subjected to monitoring, and measures the status quantity that is an object to be monitored. In this embodiment, this sensor 4 is provided at the reformer 11 or inside the reformer 11. Example sensors 4 are a thermometer and a voltmeter. In this embodiment, the sensor 4 is a thermometer, and measures the temperature of the burner chamber in the reformer 11 or the temperature of a reforming catalyst layer. Note that the status quantity of the object to be monitored is the temperature in the CO removing device when the object to be monitored is the CO removing device, and is the output voltage by the fuel-cell body 12 when the object to be monitored is the fuel-cell body 12.

The supplying device 2 supplies the fluid to the reformer 11 or the fuel-cell body 12. Supplied to the reformer 11 are the raw fuel and air, while supplied to the fuel-cell body 12 is air. The supplying device 2 includes, for example, an raw-fuel supplying device that supplies the raw fuel to the desulfurization device, an air supplying device that supplies air to the reforming device, an air supplying device that supplies air to the piping between the CO transforming device and the CO removing device, and an air supplying device that supplies air to the oxidizer electrode of the fuel-cell body 12. Example raw fuels supplied by the raw-fuel supplying device are natural gas, liquefied petroleum gas (LPG), and city gas, and may be any gas applied to enable the fuel-cell power generation system to generate power.

The supplying device 2 adjusts the flow rate of the supplied fluid based on the operation quantity. Example supplying devices 2 are a diaphragm-type blower, and a flow-rate adjusting valve that has the open level of the adjusting valve as the operation quantity. In this embodiment, the following explanation will be given of an example case in which the supplying device 2 is a blower.

The control device 3 comprehensively controls the overall action of the fuel-cell power generation system, and mainly controls the operation quantity of the supplying device 2, thereby controlling the flow rate of the fluid supplied by the supplying device 2. When the supplying device 2 is a blower, the supplied flow rate is adjusted by controlling the number of rotation. The control device 3 controls the operation quantity of the supplying device 2 in a way that the status quantity obtained by the sensor 4 becomes a preset status quantity value at the stage of an initial activation, at the time of factory acceptance test, after installation, or after maintenance. In this embodiment, the number of rotation of the blower is controlled in a way that the reformer temperature follows the reformer-temperature set value.

FIG. 2 is a diagram illustrating a structure of the control device 3 according to this embodiment.

The control device 3 according to this embodiment includes an estimated value calculating unit 31 that calculates a flow rate estimated value which is the flow rate estimated based on the operation quantity of the supplying device 2, a setting value calculating unit 32 that calculates the flow rate setting value for the supplying device 2 based on the correspondence between a current of the fuel-cell body 12 and the necessary fluid flow rate for obtaining such current, an estimated value correcting unit 33 that corrects the flow rate estimated value, a following unit 34 that calculates the operation quantity instruction value for the supplying device 2 in a way that the flow rate estimated value corrected by the estimated value correcting unit 33 follows the flow rate setting value, and an unillustrated memory unit that stores various correspondence beforehand.

The estimated value calculating unit 31 calculates the flow rate estimated value based on the correspondence between the operation quantity of the supplying device 2 and the fluid flow rate supplied based on the operation quantity. The estimated value correcting unit 33 calculates a correction coefficient for the status quantity measured by the sensor 4 to follow the status quantity setting value. More specifically, the estimated value correcting unit 33 performs a PI control based on the deviation between the measured reformer temperature, and a reformer temperature setting value that is obtained from the correspondence between the reformer temperature and the power generation amount by the fuel-cell body 12, to calculate the correction coefficient. Next, the estimated value correcting unit 33 multiplies the flow rate estimated value by the calculated correction coefficient, and corrects the flow rate estimated value. Instead of the power generation amount in the above correspondence, the current or the voltage of the fuel-cell body 12 may be applied. Note that instead of the PI control, a proportional control or a PID control may be applied. The memory unit stores, in advance, all correspondences explained in this specification.

The control device 3 adjusts the correction coefficient calculated by the estimated value correcting unit 33 to fall within a predetermined range. An example range of the correction coefficient for the supplied flow rate is between 0.98 and 1.02. The range of the correction coefficient can be designed and changed as appropriate. When the correction coefficient exceeds the predetermined range, the system operation is suspended. This is because there is a possibility that some kind of defect like a fuel leakage is occurring. For example, when the correction coefficient reaches a preset upper limit value, the control device 3 suspends the system operation. In addition, when the correction coefficient reaches the preset upper limit value and it is confirmed that there is no fuel leakage, the control device 3 controls the operation quantity of the supplying device 2 in a way that the correction coefficient falls within the predetermined range.

### [1-2. Action]

An action of the fuel-cell power generation system according to this embodiment will be explained. First of all, the principle of this system will be explained. There is a correspondence between the reformer temperature and the power generation amount by the fuel-cell body 12, and the reformer temperature setting value is set as appropriate in accordance with the desired power generation amount. In addition, the reformer temperature has a correspondence with the supplied flow rate by the supplying device 2, and there is also a correspondence between the supplied flow rate by the supplying device 2 and the operation quantity of the supplying device 2. Accordingly, by controlling the operation quantity of the supplying device 2 in a way that the reformer temperature becomes the reformer temperature setting value, a desired power generation amount.

However, the supplying device 2 has an individual difference, and there is a gap between the correspondence between the operation quantity and the supplied flow rate according to the embodiment, and the correspondence between the operation quantity and the supplied flow rate at the actually installed supplying device 2. This gap appears as a deviation between the reformer temperature and the reformer temperature setting value. In this embodiment, in order to correct such gap, the estimated value correcting unit 33 corrects the flow rate estimated value. The cause of the deviation between the reformer temperature and the reformer temperature setting value is not limited to the individual difference of the supplying device 2, and may be a difference in the pressure loss of fluid in the system, and the individual difference of the flowmeter, etc., and those errors are also corrected by the estimated value correcting unit 33.

Next, the action of this system will be explained. It is on the premise that the estimated value correcting unit 33 has obtained the reformer temperature setting value beforehand based on the correspondence between the current of the fuel-cell body 12 and the reformer temperature. The following procedure is merely an example, and the sequence may be changed as appropriate.
(1) First, the estimated value calculating unit 31 calculates, based on the correspondence between the operation quantity (number of rotation) of the supplying device 2 and the supplied flow rate at this operation quantity, and based on the present operation quantity, the supplied flow rate estimated value.
(2) Next, the sensor 4 measures the temperature of the reformer 11, and the estimated value correcting unit 33 obtains the deviation between the measured reformer temperature and the reformer temperature setting value, and calculates the correction coefficient in a way that the deviation is corrected, that is, the deviation becomes zero. Subsequently, the estimated value correcting unit 33 multiplies the flow rate estimated value by the calculated correction coefficient, thereby calculating the corrected flow rate estimated value.
(3) In addition, the setting value calculating unit 32 calculates the flow rate setting value for the supplying device 2 based on the correspondence between the current of the fuel-cell body 12 and the necessary fluid flow rate for obtaining this current.
(4) Subsequently, the following unit 34 receives the corrected flow rate estimated value and the flow rate setting value as input, and calculates, by the PI control, the instruction value for the number of rotation in order to cause the reformer temperature to be the reformer temperature setting value.
(5) The control device 3 sets the operation quantity (number of rotation) of the supplying device 2 to be the calculated instruction value for the number of rotation, thereby matching the reformer temperature with the reformer temperature setting value.

The above (1) to (5) actions are performed at a stage of initial activation, at the time of factory acceptance test, after installation, or after maintenance. By performing the correction on the flow rate estimated value at such initial stage, when there is no change in the status of the system, the subsequent correction coefficient can be set to 1.0.

A specific example of adjusting the correction coefficient will be explained. In the case the correction coefficient calculated by the estimated value correcting unit 33 is 1.2, when the operation quantity of the supplying device 2 is adjusted in accordance with the operation quantity instruction value calculated by the following unit 34, the reformer temperature becomes consistent with the reformer temperature setting value. In this way, the correction coefficient to be calculated after the feedback that causes the reformer temperature to be consistent with the reformer temperature setting value becomes 1.0. The same is true of the case in which the correction coefficient becomes lower than 1.0. As explained above, the correction coefficient falls within the predetermined range.

On the other hand, when the correction coefficient reaches the preset upper limit value, the control device 3 suspends the system operation. After the operation is suspended, when it is confirmed that there is no fuel leakage, the number of rotation of the supplying device 2 is controlled in a way that the correction coefficient falls within the predetermined range.

### [1-3. Effect]

(1) The fuel-cell power generation system according to this embodiment includes the fluid processing device 1 having the reformer 11 or the fuel-cell body 12, the supplying device 2 that supplies the fluid to the fluid processing device 1, the control device 3 that controls the fluid flow rate by controlling the operation quantity of the supplying device 2, and the sensor 4 which is provided in the fluid processing device 1, and measures the status quantity, that is the object to be monitored, of the fluid processing device 1 or of the interior of the fluid processing device 1. The control device 3 controls the operation quantity at a stage of initial activation, at the time of factory acceptance test, after installation, or after maintenance in a way that the obtained status quantity by the sensor 4 becomes the status quantity setting value.
   Hence, a stable system operation is achieved. That is, at a stage of initial activation, at the time of factory acceptance test, after installation, or after maintenance, each device and facility in the system is inspected at least one time, and thus it can be considered that there is no fuel leakage in the fuel-cell power generation system. Hence, the cause of the deviation between the measured status quantity and the setting value may originate from other than the fuel leakage such as the variability in characteristics of each device, etc., and by performing the correction at the initial stage, even if the individual difference of the supplying device varies and the pressure loss factor varies, etc., those variabilities can be eliminated. Hence, instable operation by the operation that involves the error in individual difference can be prevented, and thus a stable operation can be achieved.
(2) The control device 3 includes the estimated value calculating unit 31 that calculates the flow rate estimated value which is the flow rate estimated from the operation quantity of the supplying device 2, the setting value calculating unit 32 that calculates the flow rate setting value for the supplying device 2 based on the correspondence between the current of the fuel-cell body 12 and the necessary fluid flow rate for obtaining the current, the estimated value correcting unit 33 that corrects the flow rate estimated value, and the following unit 34 that calculates the operation quantity instruction value for the supplying device 2 in a way that the flow rate estimated value corrected by the estimated value correcting unit 33 follows the flow rate setting value. The estimated value correcting unit 33 calculates the correction coefficient that causes the status quantity measured by the sensor 4 to follow the status quantity setting value, and multiplies the flow rate estimated value by the correction coefficient for the correction.
   Hence, the flow rate estimated value is corrected, and thus the characteristic variability originating from the individual difference of the supplying device 2 and he individual difference of the flowmeter that measures the supplied flow rate can be corrected. In addition, since the precise estimation of the flow rate supplied by the supplying device 2 is enabled, it is unnecessary to measure this supplied flow rate by a flowmeter. Hence, the flowmeter can be eliminated, and the costs can be consequently reduced. In particular, according to the fuel-cell power generation system, since there are multiple locations needing a supply of fluid, such as the supply of the raw fuel to the reformer 11, the supply of air to the burner chamber in the reformer 11, the supply of air to remove CO in the reformer 11, and the supply of air to the fuel-cell body 12, the costs can be reduced as much according to this embodiment because of the elimination of a flowmeter.
(3) The control device 3 adjusts the correction coefficient to fall within the predetermined range. This achieves a stable operation.
(4) The system is suspended when the correction coefficient reaches the preset upper limit value. This enables a safe system operation. That is, when, for example, a fuel leakage is occurring between the reformer 11 and the fuel-cell body 12, if the correction coefficient is increased, the leaking flow rate also increases. In contrast, by setting the upper limit value for the correction coefficient, when the correction coefficient reaches the upper limit value, a determination can be made that there is a fuel leakage. Hence, the system can be suspended, and the continuation of the defective status can be prevented, thereby achieving a safe operation.
(5) The control device 3 controls the operation quantity of the supplying device 2 in a way that the correction coefficient falls within the predetermined range when the correction coefficient reaches the preset upper limit value if it is confirmed that there is no fuel leakage.

Hence, even if the calorific value of the supplied fuel keenly changes, this can be addressed. That is, the cause of the correction value reaching the upper limit is not always limited to a fuel leakage. That is, although the setting value is given based on the estimated calorific value of the fuel, when the calorific value keenly changes, for example when the fuel that has a low calorific value is supplied under a condition at which it is expected that the fuel which has a large calorific value is being supplied, since there is a relationship between the power generation amount and the calorific value of the fuel, it is necessary to supply more fuel in order to achieve the necessary power generation amount, and therefore the correction coefficient may reach the upper limit value. According to this embodiment, such case can be addressed, and thus the necessary power generation amount is ensured.

### [2. Second Embodiment]

### [2-1. Structure]

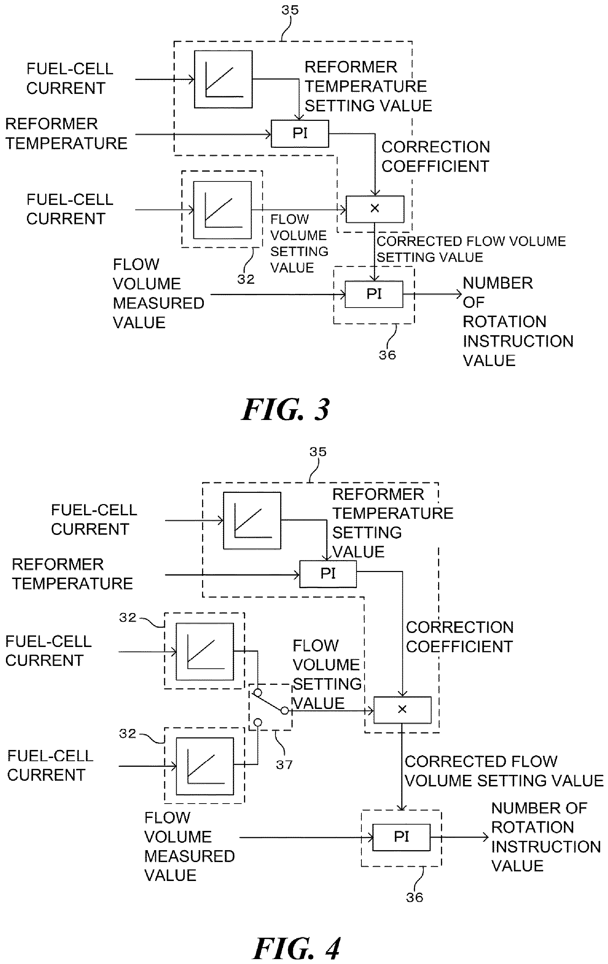

An explanation will be given of a second embodiment with reference to FIG. 3. The second embodiment employs the same basic structure as that of the first embodiment. In the following explanation, only the difference from the first embodiment will be explained, and the same reference numeral will be given to the same element as that of the first embodiment, and the detailed explanation will not be repeated.

In this embodiment, an unillustrated flowmeter is provided to the supplying device 2. In the case of, for example, the raw fuel supplying device, the flowmeter is provided at the piping between the raw fuel supplying device and the reformer 11. In this embodiment, since the flowmeter is provided, instead of the flow rate estimated value, a measured value, which is a flow rate supplied by the supplying device measured by the flowmeter, is applied for the control by the control device 3.

FIG. 3 is a diagram illustrating a structure of the control device 3 according to the second embodiment. The control device 3 of this embodiment includes the setting value calculating unit 32, a setting value correcting unit 35 that corrects the flow rate setting value, and a following unit 36 that calculates the operation quantity instruction value for the supplying device 2 in a way that the flow rate supplied by the supplying device 2 follows the flow rate setting value corrected by the setting value correcting unit 35.

The setting value correcting unit 35 calculates the correction coefficient that causes the status quantity measured by the sensor 4 to follow the status quantity setting value. More specifically, the setting value correcting unit 35 performs a PI control based on the deviation between the measured reformer temperature and the reformer temperature setting value obtained from the correspondence between the reformer temperature and the power generation amount by the fuel-cell body 12, thereby calculating the correction coefficient. In addition, the setting value correcting unit 35 multiplies the flow rate setting value by the calculated correction coefficient, thereby correcting the flow rate setting value. Instead of the power generation amount in the above correspondence, the current or the voltage of the fuel-cell body 12 may be applied. Note that instead of the PI control, a proportional control or a PID control may be applied.

The control device 3 adjusts the correction coefficient calculated by the setting value correcting unit 35 to fall within a predetermined range. An example range of the correction coefficient for the supplied flow rate is between 0.98 and 1.02 or between 0.8 and 1.2. The range of the correction coefficient can be designed and changed as appropriate. When the correction coefficient exceeds the predetermined range, the system operation is suspended. This is because there is a possibility that some kind of defect like a fuel leakage is occurring.

A specific example of adjusting the correction coefficient will be explained. In the case the correction coefficient calculated by the setting value correcting unit 35 is 1.2, when the operation quantity of the supplying device 2 is adjusted in accordance with the operation quantity instruction value calculated by the following unit 36, the reformer temperature becomes consistent with the reformer temperature setting value. In this way, the correction coefficient to be calculated after the feedback that causes the reformer temperature to be consistent with the reformer temperature setting value becomes 1.0. As explained above, the correction coefficient falls within the predetermined range.

The following unit 36 calculates the operation quantity instruction value for the supplying device 2 in a way that the flow rate of the supplying device 2 measured by the flowmeter follows the flow rate setting value corrected by the setting value correcting unit 35.

### [2-2. Action]

An action of the fuel-cell power generation system according to this embodiment will be explained. The basic action is the same as that of the first embodiment, and only the difference will be explained.

According to this system, in order to correct a gap between the reformer temperature and the reformer temperature setting value, the setting value correcting unit 35 corrects the flow rate setting value. The cause of the deviation between the reformer temperature and the reformer temperature setting value is not limited to the individual difference of the supplying device 2, and may be a difference in the pressure loss of fluid in the system, the individual difference of the flowmeter provided to the supplying device 2, and the calorific value of the supplied fuel, etc., and those errors are also corrected by the estimated value correcting unit 33.

Next, an explanation will be given of the action of this system. It is on the premise that the setting value correcting unit 35 has obtained the reformer temperature setting value beforehand based on the correspondence between the current of the fuel-cell body 12 and the reformer temperature. The following procedure is merely an example, and the sequence may be changed as appropriate.
(1) First, the flowmeter measures the flow rate supplied by the supplying device 2.
(2) The setting value calculating unit 32 calculates the flow rate setting value for the supplying device 2 based on the correspondence between the current of the fuel-cell body 12 and the necessary fluid flow rate for obtaining the current.
(3) The sensor 4 measures the temperature of the reformer 11, the setting value correcting unit 35 obtains the deviation between the measured reformer temperature and the reformer temperature setting value, and the correction coefficient is calculated in a way that the deviation is corrected, that is, the deviation becomes zero. In addition, the setting value correcting unit 35 multiplies the flow rate setting value by the calculated correction coefficient, and calculates the corrected flow rate setting value.
(4) Next, the following unit 36 receives the corrected flow volume setting value and the flow volume measured value input, and calculates, through the PI control, the instruction value for the number of rotation that causes the reformer temperature to be the reformer temperature setting value.
(5) The control device 3 causes the operation quantity (number of rotation) of the supplying device 2 to be the calculated instruction value for the number of rotation, and thus the reformer temperature becomes consistent with the reformer temperature setting value.

The above (1) to (5) actions are performed at a stage of initial activation, at the time of factory acceptance test, after installation, or after maintenance. By performing the correction on the flow rate estimated value at such initial stage, when there is no change in the status of the system, the subsequent correction coefficient can be set to be 1.0.

A specific example of adjusting the correction coefficient will be explained. In the case the correction coefficient calculated by the setting value correcting unit 35 is 1.2, when the operation quantity of the supplying device 2 is adjusted in accordance with the operation quantity instruction value calculated by the following unit 36, the reformer temperature becomes consistent with the reformer temperature setting value. In this way, the correction coefficient to be calculated after the feedback that causes the reformer temperature to be consistent with the reformer temperature setting value becomes 1.0. The same is true of the case in which the correction coefficient becomes lower than 1.0. As explained above, the correction coefficient falls within the predetermined range.

On the other hand, when the correction coefficient reaches the preset upper limit value, the control device 3 suspends the system operation. After the operation is suspended, when it is confirmed that there is no fuel leakage, the number of rotation of the supplying device 2 is controlled in such way that the correction coefficient falls within the predetermined range.

### [2-3. Effect]

According to this embodiment, the control device 3 includes the setting value calculating unit 32 that calculates the flow rate setting value for the supplying device 2 based on the correspondence between the current of the fuel-cell body 12 and the necessary fluid flow rate for obtaining this current, the setting value correcting unit 35 that corrects the flow rate setting value, and the following 36 that calculates the operation quantity instruction value for the supplying device 2 in a way that the supplied flow rate by the supplying device 2 follows the flow rate setting value corrected by the setting value correcting unit 35. The setting value correcting unit 35 calculates the correction coefficient that causes the status quantity measured by the sensor 4 to follow the status quantity setting value, and the flow rate setting value is multiplied by the correction value for correction.

Hence, even if there is a variability in characteristics of the flowmeter, and there is a variability in calorific value of the fuel supplied from the raw fuel supplying device, the flow rate setting value is corrected, and thus the variabilities are corrected. In particular, since correction is performed on the flow rate setting value at the initial stage like at a stage of initial activation, at the time of factory acceptance test, after installation, or after maintenance, the correction is not made during the operation involving the error originating from the individual difference. Hence, a stable system operation can be achieved. Since the status quantity is corrected as explained above, the cause of error before the time point at which the status quantity becomes the status quantity obtained by the sensor 4 can be eliminated, and thus a stable operation can be achieved.

### [3. Third Embodiment]

### [3-1. Structure]

An explanation will be given of a third embodiment with reference to FIG. 4. The third embodiment employs the same basic structure as that of the second embodiment. In the following explanation, only the difference from the second embodiment will be explained, and the same reference numeral will be given to the same element as that of the second embodiment, and the detailed explanation will not be repeated.

In this embodiment, what is focused among the types of the supplying device 2 is the raw fuel supplying device. Hence, the fluid is a fuel. Example fuels are a city gas (13A fuel), and a liquefied petroleum gas (LPG) . Those fuels have different calorific values.

FIG. 4 is a diagram illustrating a structure of the control device 3 according to this embodiment. As illustrated in FIG. 4, the control device 3 of this embodiment includes a plurality of the setting value calculating units 32, and changing device 37 for changing the flow rate setting value in accordance with the calorific value of the fuel. The setting value calculating unit 32 has a different correspondence between the current of the fuel-cell body 12 and the necessary fuel flow rate for obtaining this current. This is because the necessary fuel flow rate differs when the calorific value of the fuel differs.

The changing device 37 changes, for example, the connection to the plurality of the setting value calculating units 32. An example change by the changing device 37 is as follows.
(1) When it has been known beforehand that the fuel which has a different calorific value is to be supplied, the connection may be changed beforehand.
(2) When there is a variability in quality of the fuel to be supplied, the calorific value may change. In this case, when, for example, the predetermined change in calorific value exceeds a predetermined threshold, the flow rate setting value may be changed. The detection on the calorific value is reflected on the correction coefficient for the burner temperature. When, for example, a gas that has a low calorific value is introduced, the correction coefficient for the burner temperature increases, and when a gas that has a high calorific value is introduced, the correction coefficient decreases. It is effective to change the flow rate setting value as explained above when the correction coefficient decreases.
(3) A threshold may be set to be consistent with the upper limit value and lower limit value of the correction coefficient or within the predetermined range for the correction coefficient, and when the correction coefficient reaches the threshold, a determination may be made that there is a large change in calorific value, and the flow rate setting value may be changed.
(4) The changing device 37 may change the flow rate setting value depending on whether the fuel is the city gas or the liquefied petroleum gas.
(5) The changing device 37 may change the flow rate setting value in accordance with the calorific value of the fuel that is different area by area.

### [3-2. Action and Effect]

(1) According to this embodiment, the fluid supplied by the supplying device 2 is a fuel, and the control device 3 includes the changing device 37 that changes the flow rate setting value in accordance with the calorific value of the fuel. This enables the system to cope with a case in which fuels that have different calorific values are to be supplied. Even if the calorific value of the fuel supplied by the supplying device 2 changes, the system is capable of coping with the change in calorific value of the fuel.
(2) The changing device 37 changes the flow rate setting value in accordance with whether the type of fuel supplied by the supplying device 2 is the city gas or the liquefied petroleum gas. Hence, even when the type of supplied fuel differs, the necessary supplied flow rate can be supplied appropriately, and thus the system is capable of coping with the case in which the type of fuel differs.
(3) The changing device 37 changes the flow rate setting value in accordance with the calorific value of the fuel which is different area by area. Hence, even when the calorific value of the fuel supplied via a pipeline differs area by area, the system is capable of coping with the case without a change in the basic structure of the system. When, for example, this system is installed at an area where the calorific value of the supplied fuel differs such as an H-gas supply area where the supplied fuel has a high calorific value, and an L-gas supply area where the supplied fuel has a small calorific value, like in Europe, this system is capable of coping with such difference.

### [4. Other Embodiments]

Several embodiments of the present disclosure have been explained above in this specification, but those embodiments are merely presented as examples, and are not intended to the scope of the present disclosure. The above embodiments can be carried out in other various forms, and various omissions, replacements, and modifications can be made without departing from the scope of the present disclosure. Such embodiments and modified forms thereof are within the scope of the present disclosure, and also within the scope of the invention as recited in the appended claims and the equivalent ranges thereto.

As for other embodiments, although the object to be monitored is the reformer 11, the object may be the fuel-cell body 12. In this case, the status quantity, which is an object to be monitored, is the output voltage by the fuel-cell body 12, and the sensor 4 is a voltage meter. When the output voltage measured by the voltage meter is inconsistent with the preset output voltage setting value, in order to correct such inconsistency, the flow rate estimated value may be corrected like the first embodiment, or the flow rate setting value may be corrected like the second and third embodiments.

## Claims

1. A fuel-cell power generation system comprising:
a fluid processing device comprising a reformer or a fuel-cell body;
a supplying device supplying a fluid to the fluid processing device;
a control device controlling a flow rate of the fluid by controlling an operation quantity of the supplying device; and
a sensor provided in the fluid processing device, and measuring a status quantity, that is an object to be monitored, of the fluid processing device or of an interior of the fluid processing device,
the control device controls the operation quantity in a way that the status quantity obtained by the sensor becomes a preset status quantity setting value at a stage of initial activation, at a time of factory acceptance test, after installation or after maintenance.

2. The fuel-cell power generation system according to claim 1, wherein:
the control device comprises:
an estimated value calculating unit calculating a flow rate estimated value that is a flow rate estimated from the operation quantity of the supplying device;
a setting value calculating unit calculating a flow rate setting value for the supplying device based on a correspondence between a current of the fuel-cell body and a necessary fluid flow rate for obtaining the current;
an estimated value correcting unit correcting the flow rate estimated value; and
a following unit calculating an operation quantity instruction value for the supplying device in a way that the flow rate estimated value corrected by the estimated value correcting unit follows the flow rate setting value, and
the estimated value correcting unit calculates a correction coefficient that causes the status quantity obtained by the sensor to follow the status quantity setting value, and multiplies the flow rate estimated value by the correction coefficient for correction.

3. The fuel-cell power generation system according to claim 1, wherein:
the control device comprises:
a setting value calculating unit calculating a flow rate setting value for the supplying device based on a correspondence between a current of the fuel-cell body and a necessary fluid flow rate for obtaining the current;
a setting value correcting unit correcting the flow rate setting value; and
a following unit calculating an operation quantity instruction value for the supplying device in a way that the flow rate supplied by the supplying device follows the flow rate setting value corrected by the setting value correcting unit, and
the setting value correcting unit calculates a correction coefficient that causes the status quantity obtained by the sensor to follow the status quantity setting value, and multiplies the flow rate setting value by the correction coefficient for correction.

4. The fuel-cell power generation system according to claim 3, wherein:
the fluid supplied by the supplying device is a fuel; and
the control device comprises changing device for changing the flow rate setting value in accordance with a calorific value of the fuel.

5. The fuel-cell power generation system according to claim 4, wherein the changing device changes the flow rate setting value in accordance with whether the fuel supplied from the supplying device is a city gas or a liquefied petroleum gas.

6. The fuel-cell power generation system according to claim 4, wherein the changing device changes the flow rate setting value in accordance with the calorific value of the fuel that is different area by area.

7. The fuel-cell power generation system according to any one of claims 1 to 6, wherein the fuel-cell power generation system is suspended when the correction coefficient reaches a preset upper limit value.

8. The fuel-cell power generation system according to any one of claims 1 to 7, wherein, when the correction coefficient reaches a preset upper limit value, upon confirming that there is no fuel leakage, the control device controls the operation quantity of the supplying device in a way that the correction coefficient falls within a predetermined range.
